# FASCICULE DE BREVET EUROPEEN

(11) **EP 1 621 400 B1**
(45) Date de publication et mention de la délivrance du brevet: **02.05.2012**
(21) Numéro de dépôt: 05291522.0
(22) Date de dépôt: 13.07.2005
(51) Int. Cl.: B60Q 1/12

(54) **Procédé d'éclairage d'une route par des projecteurs pivotants**
Verfahren zur Beleuchtung einer Strasse mit schwenkbaren Scheinwerfern
Method for illumating a road with swiveling headlamps

(30) Priorité: 27.07.2004 FR 0408303
(43) Date de publication de la demande: 01.02.2006
(73) Titulaire: VALEO VISION, 93012 Bobigny Cedex (FR)
(72) Inventeur: Godbillon, Vincent, 75011 Paris (FR); l'Hermine, Alban, 75005 Paris (FR)

(56) Documents cités:
- EP-A- 0 893 305
- EP-A- 1 234 717
- FR-A- 2 804 642
- FR-A- 2 824 623

## Description

### Domaine de l'invention

L'invention concerne un procédé d'éclairage d'une route par des projecteurs de véhicule de type pivotant permettant d'obtenir un spot lumineux adapté aux conditions de circulation du véhicule sur la route. Ce procédé d'éclairage permet d'obtenir, dans le faisceau d'éclairage, un seul et unique spot lumineux, ou point chaud, pour l'ensemble des faisceaux émis par le projecteur droit et le projecteur gauche du véhicule. L'invention concerne également un véhicule automobile mettant en oeuvre ce procédé.

L'invention trouve des applications dans le domaine des véhicules automobiles et, notamment, dans le domaine de l'éclairage d'une route par des véhicules automobiles.

### Etat de la technique

Dans le domaine de l'éclairage par des véhicules automobiles, il est connu d'utiliser plusieurs types d'éclairage en fonction des conditions de circulation. En particulier, lorsqu'un véhicule roule à grande vitesse sur une route peu fréquentée, l'éclairage préconisé est un éclairage dit «de route » qui permet d'éclairer la route devant le véhicule, sur une grande distance de l'ordre de 200 mètres.

Au contraire, lorsque le véhicule roule à faible vitesse, par exemple, lorsque la route est sinueuse, alors le conducteur doit choisir un éclairage dit «de croisement » qui offre une portée lumineuse de l'ordre de 100 mètres.

Sur certains véhicules, l'éclairage de route et l'éclairage de croisement sont réalisés par des dispositifs de projection de lumière différents appelés, respectivement, feux de route et feux de croisement.

Actuellement, sur la plupart des véhicules récents, l'éclairage de route et l'éclairage de croisement est réalisé par les même projecteurs par exemple, équipés de caches pivotants assurant à chaque projecteur une double fonctionnalité de route et de croisement. Plus précisément, le projecteur permet la fonction d'éclairage de route lorsque le cache est dans une position rabattue, laissant passer la totalité du faisceau lumineux. Le projecteur permet la fonction d'éclairage de croisement lorsque le cache est en position relevée, créant une ligne de coupure, qui permet la projection d'une partie seulement du faisceau lumineux, en particulier la partie située sous la ligne de coupure. Cette coupure est une ligne d'éclairage maximum au-dessus de laquelle il est interdit d'éclairer la route, en mode de croisement. Dans les pays à circulation à droite, en particulier en France, cette ligne de coupure est horizontale sur toute la largeur de la route et sur le bas côté gauche de la route ; Elle forme un angle de 15°C au-dessus de l'horizontale, sur le bas côté droit de la route. Elle a pour rôle d'éviter que l'éclairage du véhicule n'éblouisse un conducteur dans un véhicule en sens inverse.

Classiquement, les projecteurs sont fixes et éclairent la route suivant l'axe du véhicule. Actuellement, il existe des projecteurs permettant d'éclairer la route dans les virages, améliorant ainsi l'éclairage de la route lorsque celle-ci est sinueuse.

Pour cela, les projecteurs bifonction comportent généralement des modules d'éclairage pivotants. Ainsi, lorsque le véhicule tourne à droite, le module d'éclairage pivote vers la droite du véhicule et, au contraire, lorsque le véhicule tourne sur la gauche, le module d'éclairage pivote vers la gauche du véhicule. L'angle de pivotement dépend de chaque module d'éclairage. Cet angle de pivotement peut être identique pour le projecteur droit et pour le projecteur gauche du véhicule ; il peut aussi être différent. Dans la plupart des cas, pour l'éclairage de croisement, les modules d'éclairage pivotants forment des angles, par rapport à l'axe du véhicule, qui sont différents s'il s'agit d'un pivotement à droite ou d'un pivotement à gauche. L'écart angulaire obtenu entre le pivotement à droite et le pivotement à gauche est d'un facteur de l'ordre 2. Par exemple, lorsque l'angle de pivotement, ou angle de rotation, est proche de 15° pour le projecteur situé du côté du virage, alors l'angle de pivotement est de l'ordre de 8° pour le projecteur situé à l'opposé du virage. Cet écart angulaire a pour effet de limiter l'appauvrissement en lumière sur le côté opposé au virage.

Dans un projecteur bifonction, l'éclairage dans les virages est obtenu :
- soit par un module additionnel qui s'allume, éventuellement en pivotant, lorsque le véhicule tourne ; dans ce cas, le module principal est fixe et il éclaire la route selon l'axe du véhicule ;
- soit par un module principal pivotant qui s'oriente dans la direction où l'éclairage est nécessaire ; dans ce cas, le module principal peut permettre un éclairage de croisement seul ou bien à la fois un éclairage de croisement et un éclairage de route par escamotage d'un cache, par exemple.

Quel que soit le type de projecteur, pour chaque fonctionnalité d'éclairage, un faisceau lumineux est émis. Et chaque faisceau lumineux comporte un spot lumineux, ou point chaud, situé au centre d'un halo de lumière moins intense. On appelle « point chaud » la zone d'intensité lumineuse maximale située au centre d'un faisceau lumineux, dans l'axe du faisceau lumineux. Ainsi, le faisceau lumineux émis par chaque module du projecteur comporte une zone centrale d'intensité lumineuse très élevée entourée d'une zone lumineuse d'intensité plus faible. Aussi, lorsque le véhicule se trouve dans un virage, alors l'éclairage de la route comporte une juxtaposition de taches lumineuses, correspondant aux points chauds des différents faisceaux lumineux, séparées par des zones sombres. Dans une succession de virages, le conducteur du véhicule peut même voir les deux points chauds des modules pivotants passer de part et d'autre du point chaud provenant des modules fixes.

Par exemple, le document FR 2 804 642 décrit un véhicule combinant à la fois des projecteurs pivotants d'éclairage principal et des projecteurs fixes additionnels s'allumant dans les virages. Seul le projecteur pivotant situé à l'intérieur du virage se déplace et les projecteurs fixes ont des plages d'éclairage adjacentes. Bien que ce système permette d'obtenir des plages d'éclairage larges, plusieurs points chauds seront observés par le conducteur.

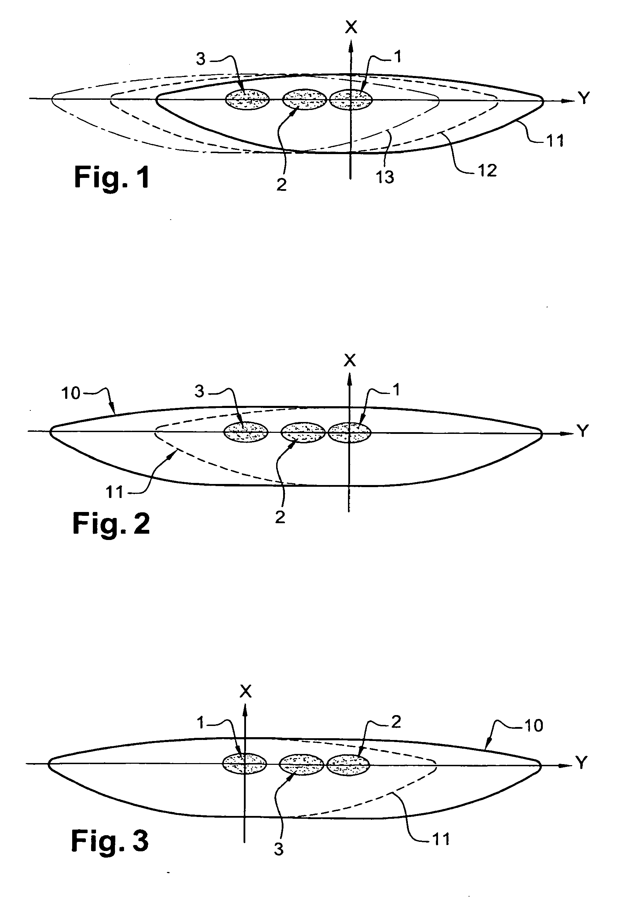

On a représenté, sur la figure 1, un exemple des différents faisceaux lumineux et points chauds vus par le conducteur d'un véhicule, dans le cas d'un éclairage de route (c'est-à-dire d'un éclairage longue distance), dans un virage à gauche de faible rayon de courbure. Plus précisément, cette figure 1 montre, au centre du repère formé par les axes X et Y, le point chaud 1 provenant des modules fixes. Ce point chaud 1 constitue la zone centrale du faisceau de route fixe 11. Comme on le voit sur la figure 1, ce point chaud 1 des modules fixes est situé au centre du repère XY, ce qui signifie qu'il est situé dans l'axe du véhicule.

Sur la figure 1, on voit également le point chaud 2 du module pivotant droit situé au centre du faisceau 12 émis par le module pivotant droit et le point chaud 3 du module pivotant gauche situé au centre du faisceau 13 du module pivotant gauche. Chaque point chaud 1, 2 et 3 est indépendant des autres points chauds. Autrement dit, chaque point chaud 1, 2 et 3 forme une zone d'intensité lumineuse élevée, séparée d'une autre zone d'intensité lumineuse élevée par une zone d'intensité beaucoup moins lumineuse. Le conducteur voit donc trois taches lumineuses, séparées par des zones sombres.

Sur la figure 2, on a représenté la résultante des faisceaux lumineux 11, 12 et 13, ce qui correspond au faisceau lumineux global vu par le conducteur du véhicule. Cette résultante 10 des faisceaux lumineux est la superposition du faisceau pivotant droit 12, avec le faisceau pivotant gauche 13 et le faisceau fixe 11. On comprend donc, d'après cette figure 2, que le conducteur du véhicule voit un faisceau lumineux relativement étendu vers la gauche, au milieu duquel il y a 3 spots lumineux, ou points chauds, séparés par des zones moins lumineuses, ce qui crée une gêne visuelle pour le conducteur.

Sur la figure 3, on a représenté la résultante 10 des faisceaux lumineux 11, 12 et 13 vue par le conducteur du véhicule, dans le cas d'un virage à droite. Comme on le voit sur cette figure 3, le faisceau résultant 10 est plus étendu vers la droite que le faisceau initial 11, c'est-à-dire le faisceau fixe. Au centre de ce faisceau résultant 10, il y a 3 points chauds séparés les uns des autres par des zones moins lumineuses.

On comprend, à partir de ces figures 1, 2 et 3, que lorsque le véhicule circule sur une route sinueuse, on passe alternativement de la situation de la figure 2 à la situation à la figure 3. Les modules d'éclairage ont alors un mouvement relatif permanent de va et vient, ce qui crée une gêne visuelle permanente pour le conducteur, avec tous les risques inhérents à cette gêne.

Le document EP 1 234 717 décrit un mode alternatif d'éclairage dans les routes sinueuses. Il consiste à faire diverger les modules pivotants pour obtenir un faisceau lumineux plus large.

### Exposé de l'invention

L'invention à justement pour but de remédier aux inconvénients des techniques exposées précédemment. A cette fin, l'invention propose un procédé d'éclairage d'une route dans lequel les spots lumineux, ou points chauds, émis par au moins par les projecteurs droit et gauche sont au moins en partie superposés de façon à former une seule et même tache lumineuse à l'intérieur du faisceau lumineux résultant. Pour cela, l'invention propose plusieurs modes de réalisation dans lesquels l'éclairage est adapté en fonction de la vitesse du véhicule et/ou de la trajectoire de celui-ci.

De façon plus précise, l'invention concerne un procédé d'éclairage d'une route par au moins un projecteur droit et un projecteur gauche montés sur un véhicule, le projecteur droit et le projecteur gauche comportant chacun au moins un module d'éclairage à longue distance pivotant par rapport à un axe du véhicule et au moins un module d'éclairage à longue distance fixe émettant un spot lumineux fixe sur la route,
- le module d'éclairage pivotant du projecteur droit émettant un faisceau lumineux droit comportant, en son centre, un spot lumineux droit, et
- le module d'éclairage pivotant du projecteur gauche émettant un faisceau lumineux gauche comportant, en son centre, un spot lumineux gauche,
caractérisé en ce que les modules d'éclairage pivotants des projecteurs droit et gauche sont réglés de façon à ce que au moins les spots lumineux droit et gauche émis par les projecteurs se superposent au moins partiellement, et en ce que les modules d'éclairage fixes ont une intensité d'éclairage variable qui est fonction de la vitesse du véhicule.

On comprend par « spot » l'impression visuelle que le conducteur du véhicule a lorsqu'il conduit sur route, consistant à distinguer une partie centrale du faisceau lumineux, dit « spot », qui est plus lumineuse que le reste du faisceau lumineux émis par le projecteur. Ce « spot » ou encore « point chaud » est donc la zone du faisceau qui émet de la lumière avec la plus grande intensité. Suivant les faisceaux lumineux, le contraste entre le « spot » et le reste du faisceau peut être plus ou moins marqué : on peut avoir une frontière franche, ou une zone de transition, un gradient d'intensité lumineuse entre les deux. Pour donner un ordre d'idée, on peut admettre par exemple que la lumière émise par le spot est au moins 40 % plus intense que le reste du faisceau, de préférence au moins 50 à 60% plus intense. On peut également définir le « spot » en considérant qu'il est délimité par les isolux à environ 40 à 60 % du maximum, par exemple à environ 50 % du maximum.

Il est aussi utile de préciser à quelle distance par rapport au véhicule/aux projecteurs on va, selon l'invention, vouloir obtenir et apprécier la superposition des spots : sur route, cette distance va être variable suivant, notamment la distance entre le véhicule et les éléments qui seront éclairés. Pour donner un ordre de grandeur, et pour pouvoir, notamment, reproduire les conditions de route en laboratoire, la distance que l'on peut considérer est d'environ 20 à 25 mètres. Une autre définition consiste à sélectionner une distance qui soit au moins 10 fois supérieure à la distance séparant les deux projecteurs montés sur le véhicule.

L'invention comporte également une ou plusieurs des caractéristiques suivantes :
- le spot lumineux fixe est situé dans l'axe du véhicule.
- chaque module d'éclairage pivotant à un angle de rotation, par rapport à l'axe du véhicule, variable en fonction de la vitesse du véhicule.
- un écart angulaire, formé par la différence des directions d'émission des modules pivotants des projecteurs droit et gauche, est variable en fonction de la vitesse du véhicule.
- l'intensité d'éclairage du module fixe augmente proportionnellement à la vitesse du véhicule.
- les angles de rotation des modules pivotants diminuent inversement proportionnellement à cette vitesse.
- l'écart angulaire des modules pivotants diminue inversement proportionnellement à la vitesse du véhicule.
- lorsque chaque projecteur comporte un module d'éclairage bifonction fournissant, dans une position de route, un éclairage à longue distance et, dans une position de croisement, un éclairage à courte distance, alors l'intensité du module fixe, les angles de rotation et l'écart angulaire des modules pivotants ont des variations différentes lorsque le module est en position de route et lorsqu'il est en position de croisement.
- la vitesse du véhicule est déterminée à partir d'une information de compteur de vitesse et/ou d'une information d'angle au volant et/ou d'une information d'accélération latérale et/ou d'une information de capteur de lacet et/ou d'informations issues du GPS du véhicule

L'invention concerne également un dispositif d'éclairage mettant en oeuvre le procédé de l'invention, et le véhicule ainsi équipé.

### Brève description des dessins

Les figures 1 et 2, déjà décrites, représentent un exemple de faisceaux d'éclairage, dans le cas d'un virage à gauche, selon l'art antérieur.

La figure 3, déjà décrite, représente un exemple de faisceaux d'éclairage, dans le cas d'un virage à droite, selon l'art antérieur.

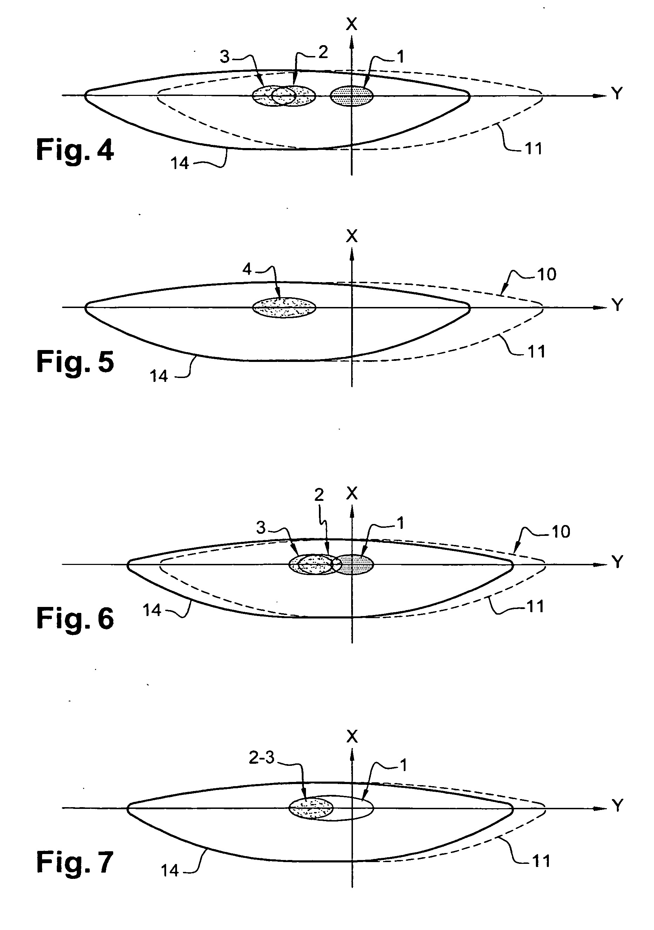

Les figures 4 et 5 représentent un exemple de faisceaux d'éclairage, dans le cas d'un virage à gauche de faible rayon de courbure, selon les premier et deuxième modes de réalisation de l'invention.

Les figures 6 et 7 représentent un exemple de faisceaux d'éclairage, dans le cas d'un virage à gauche de rayon de courbure moyen, selon les premier et deuxième modes de réalisation de l'invention.

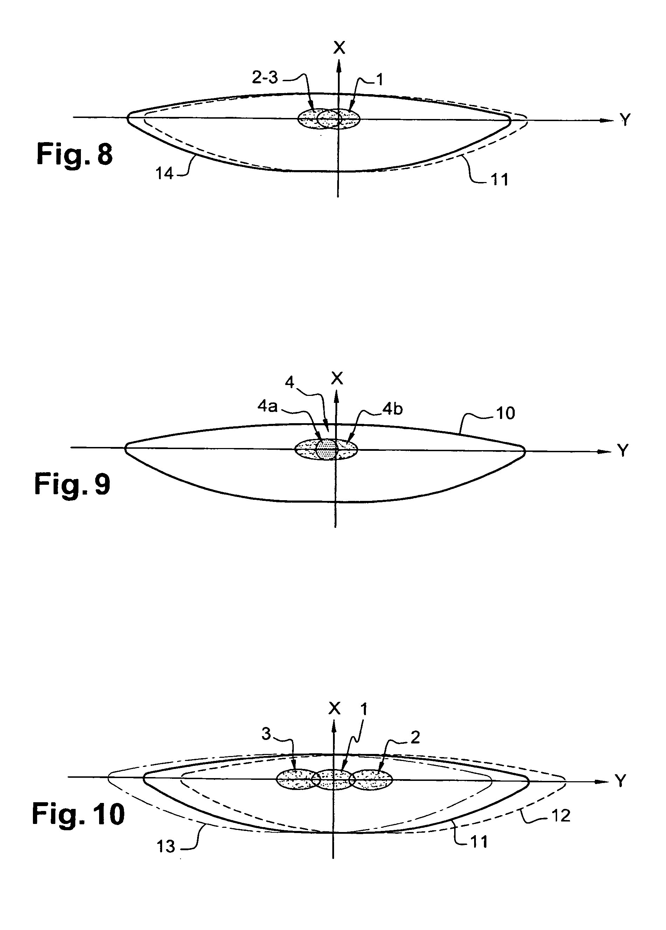

Les figures 8 et 9 représentent un exemple de faisceaux d'éclairage, dans le cas d'un virage à gauche de grand rayon de courbure, selon les premier et deuxième modes de réalisation de l'invention.

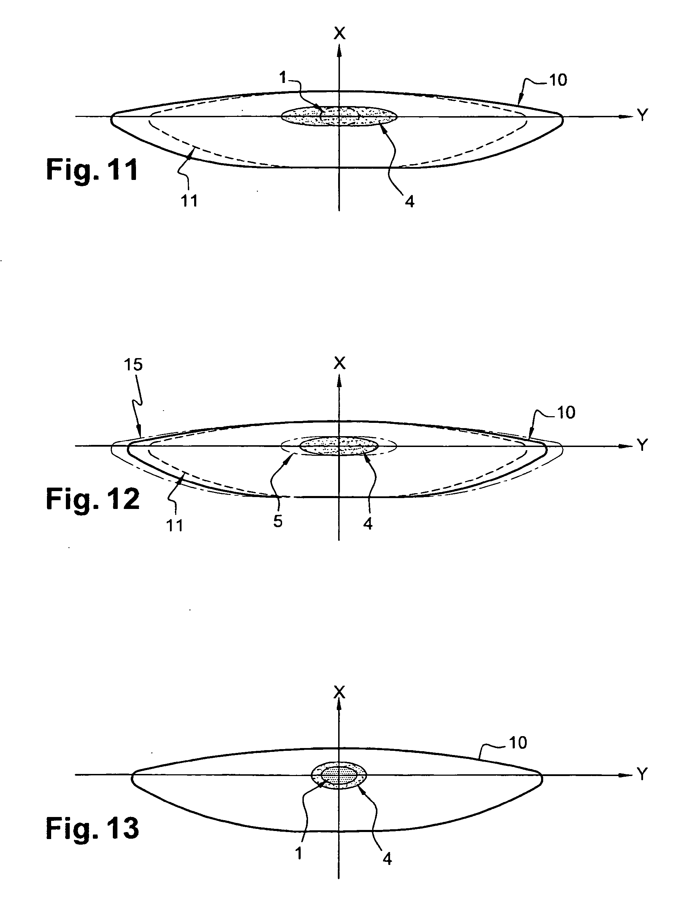

Les figures 10 et 11 représentent un exemple de faisceaux d'éclairage, à faible vitesse, selon le troisième mode de réalisation de l'invention.

La figure 12 représente un exemple de faisceaux d'éclairage, à moyenne vitesse, selon le troisième mode de réalisation de l'invention.

La figure 13 représente un exemple de faisceaux d'éclairage, à grande vitesse, selon le troisième mode de réalisation de l'invention.

### Description détaillée de modes de réalisation de l'invention

L'invention concerne un procédé d'éclairage d'une route dans lequel on cherche à superposer au moins partiellement le spot lumineux émis par le projecteur droit avec le spot lumineux émis par le projecteur gauche et/ou le spot du module d'éclairage fixe afin de former une seule et même tache lumineuse à l'intérieur du faisceau lumineux résultant. Ce procédé est basé sur les constatations suivantes :
- la fonction pivotante des projecteurs est particulièrement utile lorsque ceux-ci sont en position de croisement ; elle permet ainsi de combler le manque de lumière qu'il peut y avoir sur la gauche du faisceau lumineux, (pour un trafic à droite) en raison de la forme imposée de la coupure. Comme expliqué précédemment, en mode "éclairage de croisement", les projecteurs de type bifonction comportent un cache assurant la projection d'une partie seulement du faisceau lumineux et, en particulier, de la partie située sous la coupure. Or, cette coupure n'existe pas en position de route. Le besoin de pivotement des modules d'éclairage est donc moins important en position de route qu'en position de croisement.
- le module pivotant est surtout performant à vitesse moyenne, c'est-à-dire entre environ 40 km/h et 100 km/h. En effet, pour une vitesse inférieure à 40 km/h, avoir un faisceau de route très puissant n'est pas nécessaire puisque le conducteur voit la route suffisamment loin avec un feu de route de puissance peu élevée ; au contraire, avoir un feu de route très puissant peut procurer une gène par excès d'éclairage, avec risque de réflexion, sur les obstacles proches. Par contre, il est important que le faisceau lumineux soit large. Pour une vitesse élevée supérieure à 100 km/h, le besoin de puissance du feu route augmente, les zones à éclairer étant plus lointaines. Par contre, le besoin de pivotement des modules pivotants diminue, c'est-à-dire que l'angle de rotation nécessaire à un bon éclairage des virages diminue car le rayon de courbure des virages abordés à cette vitesse est nécessairement grand.

Dans le procédé de l'invention, on prend en compte ces constatations pour superposer, ou au moins faire chevaucher, le point chaud du module pivotant droit avec le point chaud du module pivotant gauche. Plus précisément, le procédé de l'invention prend en compte le fait qu'à faible vitesse il est nécessaire d'avoir un faisceau lumineux large avec une portée d'intensité réduite tandis qu'à grande vitesse il est intéressant d'avoir un faisceau lumineux de forte intensité mais plus concentré. Pour cela, le procédé de l'invention propose de moduler l'angle de rotation et l'intensité lumineuse de chaque module d'éclairage, en fonction de la vitesse du véhicule.

L'invention propose plusieurs modes de réalisation qui permettent tous de superposer, au moins partiellement, le point chaud du module pivotant droit avec le point chaud du module pivotant gauche ou le point chaud du module fixe. Ces modes de réalisation prennent tous en compte la vitesse du véhicule et, par voie de conséquence, les conditions de circulation du véhicule et l'état de la route sur laquelle circule le véhicule.

Un premier mode de réalisation de l'invention propose de moduler l'intensité lumineuse émise par chaque module d'éclairage en fonction de la vitesse du véhicule Un autre mode de réalisation de l'invention propose de faire varier le débattement latéral des spots lumineux en fonction de la vitesse. Ce mode de réalisation consiste donc à moduler l'angle de rotation de chaque module d'éclairage pivotant. Un autre mode encore propose de faire varier l'écartement de ces spots lumineux en fonction de la vitesse du véhicule, c'est-à-dire l'écart angulaire entre le faisceau émis par le module pivotant droit et celui émis par le module pivotant gauche. Certains de ces modes de réalisation peuvent être combinés pour permettre un chevauchement amélioré des spots lumineux.

Les différents modes de réalisation de l'invention peuvent s'appliquer à des projecteurs comportant chacun un module d'éclairage principal pivotant associé à un module additionnel fixe et/ou à des projecteurs comportant chacun un module d'éclairage fixe associé à un module additionnel pivotant. Dans la description qui va suivre, l'invention est décrite dans le cas d'un projecteur à un module fixe et un module pivotant.

Dans le premier mode de réalisation de l'invention, on fait varier l'intensité lumineuse du module fixe, en fonction de la vitesse du véhicule. On fait donc varier l'intensité du point chaud fixe. Plus précisément, l'intensité lumineuse augmente proportionnellement à la vitesse du véhicule ou, au contraire, diminue de façon inversement proportionnelle à la vitesse du véhicule. Dans une première variante de l'invention, le module additionnel fixe est éteint lorsque le véhicule roule à faible vitesse et il est allumé lorsque le véhicule atteint une vitesse prédéterminée, par exemple 100 km/h. Dans une autre variante, on choisit de faire varier l'intensité lumineuse progressivement entre une position éteinte, ou quasi éteinte, et une position d'allumage complet, c'est-à-dire d'intensité maximale. Cette variante peut être mise en oeuvre lorsque la source lumineuse du module fixe est une lampe à intensité variable, telle qu'une lampe halogène.

Parallèlement, on peut choisir de combiner ce premier mode de réalisation avec le deuxième mode de réalisation de l'invention. On choisit alors de rendre symétriques les angles de rotation à droite et à gauche des modules pivotants, c'est-à-dire qu'on autorise le même angle de rotation pour le projecteur à l'intérieur du virage et pour le projecteur à l'extérieur du virage (ou tout au moins on les rend suffisamment proches) pour que les taches de concentration des faisceaux lumineux fusionnent.

La figure 4 représente un exemple de faisceaux lumineux et de points chauds obtenus avec les premier et second modes de réalisation, dans le cas d'un virage à gauche de faible rayon de courbure (c'est-à-dire un virage serré) abordé à petite vitesse. Sur cette figure 4, on a représenté les points chauds des modules pivotants droit 2 et gauche 3 et le point chaud du module fixe 1. Le point chaud fixe 1 est situé au centre du faisceau lumineux 11 émis par le module fixe. Le point chaud fixe 1 a une faible intensité lumineuse par rapport aux points chauds pivotants 2 et 3. En effet, comme expliqué ultérieurement plus en détail, dans le cas où le véhicule roule à faible vitesse, l'intensité lumineuse du point chaud fixe 1 est diminuée afin que ledit point chaud ne soit pas visible dans le faisceau lumineux.

Par ailleurs, on voit sur cette figure 4 que les points chauds pivotants droit 2 et gauche 3 se chevauchent. Pour obtenir ce chevauchement, les modules pivotants droit et gauche ont un angle de rotation identique, ou très proche, de sorte que la tâche résultante 4 soit la plus large possible sans toutefois présenter de zone sombre entre les points chauds droit et gauche.

On a représenté, sur la figure 5, l'éclairage vu par le conducteur du véhicule dans le cas de la figure 4. Autrement dit, la figure 5 montre le faisceau résultant 10 ainsi que la tache résultante 4, ou point chaud résultant, vus par le conducteur. On comprend alors que le point chaud fixe 1 disparaît dans le faisceau lumineux résultant 10. Le point chaud fixe 1 est donc clairement séparé des points chauds pivotants 2 et 3 mais, comme son intensité est faible, elle n'est pas gênante pour le conducteur. Le conducteur voit donc un faisceau résultant 10 formé, sur la gauche, par le trait plein du faisceau des modules pivotants et, sur la droite, par le trait pointillé du faisceau du module fixe. La partie droite du faisceau résultant 10, qui correspond au faisceau du module fixe, est de faible intensité. La partie du faisceau résultant ayant la plus forte intensité est la partie située tout autour du point chaud résultant 4. On comprend donc que le point chaud fixe 1 n'est pas, ou très peu, visible par le conducteur et n'occasionne donc aucune gêne visuelle.

En conséquence, puisque le point chaud fixe n'est pas visible dans le faisceau lumineux résultant, le point chaud résultant 4 peut être éloigné du point chaud fixe 1. Autrement dit, l'angle de pivotement, ou angle de rotation, des modules pivotants droit et gauche peut être grand dans le repère XY, afin d'éclairer toute la courbure du virage. Comme l'angle de rotation des modules pivotants droit et gauche est sensiblement identique, les points chauds droit 2 et gauche 3 sont suffisamment proches pour former une seule et même tache lumineuse, constituant le point chaud résultant 4.

Le conducteur du véhicule voit donc un seul faisceau lumineux résultant 10 avec, sur la gauche, une seule tache lumineuse 4 de forte intensité. Cette tache lumineuse est donc relativement large, puisqu'elle combine les deux taches 2 et 3, et située à gauche par rapport à l'axe X du véhicule donc dans la direction du virage.

Sur les figures 6 et 7, on a représenté un exemple d'éclairage obtenu avec le procédé de l'invention, dans le cas d'un virage à gauche de rayon de courbure moyen, abordé à une vitesse moyenne. Plus précisément, la figure 6 montre, d'une part, le faisceau résultant 14 des modules pivotants et le faisceau 11 du module fixe et, d'autre part, le point chaud fixe 1 et les points chauds pivotants droit 2 et gauche 3. Dans cet exemple, le point chaud fixe 1 est d'intensité moyenne, c'est-à-dire qu'il a une intensité plus élevée que dans l'exemple des figures 4 et 5 mais moins forte que celle des points chauds pivotants 2 et 3. Par ailleurs, l'angle de rotation des modules pivotants droit et gauche est diminué par rapport à celui de l'exemple des figures 4 et 5.

On voit, sur la figure 6, que les points chauds droit 2 et gauche 3 se chevauchent largement et que le point chaud droit 2 chevauche aussi le point chaud fixe 1. Les points chauds pivotants 2 et 3 sont proches du point fixe 1 car l'angle de rotation autorisé pour les modules pivotants est moyen. Le point chaud droit 2 est donc partiellement superposé avec le point chaud gauche 3 et avec le point chaud fixe 1. Dans cet exemple, le point chaud fixe 1 est suffisamment intense pour être visible dans le faisceau lumineux résultant 10. En conséquence, comme montré sur la figure 7, les points chauds gauche 3 et droit 2 ainsi que le point chaud fixe 1 forment une seule et même tache lumineuse 4, formant le point chaud résultant. Dans l'exemple des figures 6 et 7, le point chaud résultant 4 comporte une zone 4a de forte intensité et une zone 4b d'intensité moyenne. Cette zone 4b d'intensité moyenne correspond à la partie du point chaud fixe non chevauchée par le point chaud droit. Cette zone 4b a, toutefois, une intensité suffisamment élevée pour être visible au sein du faisceau résultant 10. De cette façon, la zone 4a de forte intensité est prolongée par la zone 4b, formant ensemble le point chaud résultant 4.

Dans cet exemple, le conducteur voit un faisceau lumineux 14, prolongé sur la droite par une zone d'intensité plus faible correspondant à l'extrémité du faisceau lumineux fixe 11 pour former le faisceau résultant 10. Ce faisceau résultant 10 est centré dans le repère XY. Il assure donc un éclairage suivant l'axe X du véhicule avec une intensité plus élevée vers la gauche dudit véhicule.

Sur les figures 8 et 9, on a représenté un autre exemple d'éclairage obtenu avec le procédé de l'invention, dans le cas d'un virage à gauche de rayon de courbure élevé, abordé à grande vitesse. Dans cet exemple, le point chaud fixe 1 a une forte intensité, c'est-à-dire une intensité sensiblement aussi élevée que celle des points chauds droit et gauche. Les angles de rotation des modules pivotants sont faibles. Aussi, comme montré sur la figure 8, les points chauds droit 2 et gauche 3 sont confondus et forment un seul point chaud pivotant 2-3. Ce point chaud pivotant 2-3 superpose en partie le point chaud fixe 1. Le point chaud résultant de cette superposition est représenté sur la figure 9. On voit donc, sur cette figure 9, le point chaud résultant 4 ainsi que le faisceau résultant 10. Le faisceau résultant 10 correspond, sur la gauche, au faisceau des modules pivotants 14 et, sur la droite, au faisceau du module fixe 11. Le point chaud résultant 4 comporte une zone intense 4a qui correspond à la zone de superposition du point chaud pivotant 2-3 avec le point chaud fixe 1. II comporte une zone d'extension 4b moins intense, autour de la zone intense 4a.

Dans cet exemple, le conducteur du véhicule voit un faisceau lumineux 10 intense et un point chaud résultant 4 au centre de ce faisceau 10. Ce point chaud résultant a une zone centrale très intense située juste à gauche de l'axe X du véhicule. On obtient ainsi un éclairage à une longue distance suivant l'axe X du véhicule, avec un point lumineux plus intense légèrement à gauche de l'axe X.

Ainsi, lorsque le véhicule circule à une vitesse peu élevée, le point chaud du module fixe est noyé dans le faisceau résultant, ce qui a pour effet que seuls les points chauds des modules pivotants sont visibles. Lorsque le véhicule prend une vitesse plus importante, alors le module fixe a une intensité plus forte qui a pour effet que le point chaud du module fixe devient visible dans le faisceau résultant. Pour compenser ce point chaud fixe visible, et afin de ne pas créer un spot lumineux gênant pour le conducteur, on choisit de diminuer le débattement des modules pivotants, c'est-à-dire de réduire l'angle de rotation autorisé pour ces modules pivotants. De cette façon, le point chaud fixe fusionne avec les points chauds des modules pivotants en une seule et même tache lumineuse qui se rapproche de l'axe du véhicule au fur et à mesure que la vitesse dudit véhicule augmente.

Dans un autre mode de réalisation de l'invention, on choisit, lorsque les projecteurs bifonction passent de la position de croisement à la position de route, de neutraliser la rotation des modules pivotants, c'est-à-dire d'interdire la rotation permanente, vers la droite ou vers la gauche, de ces modules. Toutefois, on utilise la capacité à pivoter de ces modules pivotants pour choisir un angle d'émission du faisceau lumineux pour chaque module. En d'autres termes, on oriente chaque module pivotant de façon à ce que le point chaud de son faisceau lumineux chevauche le point chaud fixe ou le point chaud de l'autre module pivotant, la taille de ce chevauchement dépendant de la vitesse du véhicule. Plus précisément, on oriente chaque module pivotant de façon à ce que le chevauchement entre les points chauds soit petit lorsque le véhicule est à faible vitesse et grand lorsque le véhicule roule à grande vitesse.

Sur la figure 10, on a représenté un exemple d'éclairage selon ce troisième mode de réalisation, lorsqu'un véhicule roule à faible vitesse. Dans ce cas, le module fixe éclaire dans l'axe X du véhicule. Le point chaud fixe 1 est donc au centre du faisceau 11 du module fixe. Le point chaud droit 2 est placé à droite du point fixe 1 et le point chaud gauche 3 à gauche du point fixe 1. Chaque point chaud droit ou gauche chevauche le point fixe 1. Un tel éclairage est obtenu en faisant varier l'écart angulaire entre le module pivotant droit et le module pivotant gauche.

Sur la figure 11, on a représenté le point chaud résultant 4 et le faisceau résultant 10 vus par le conducteur. Le faisceau lumineux résultant 10 est centré sur le repère XY. II correspond au faisceau du module fixe 11 élargi par les bords des faisceaux des modules pivotants droit et gauche. Le point chaud résultant 4 comporte une zone centrale plus intense qui correspond au point chaud fixe 1 et des zones latérales moins intenses, mais tout à fait visibles par le conducteur, qui correspondent aux bords des points chauds droit et gauche. On obtient ainsi un faisceau lumineux large.

A vitesse plus élevée, l'invention propose de diminuer l'écart angulaire entre les modules pivotants afin d'augmenter l'intensité du point chaud central, c'est-à-dire du point chaud fixe. Sur la figure 12, on a représenté un exemple d'éclairage avec ce troisième mode de réalisation, dans le cas où le véhicule circule à une vitesse moyenne. Dans ce cas, le point chaud résultant 4 a une intensité plus élevée que dans le cas de la figure 11, mais plus concentrée. De même, le faisceau lumineux résultant 10 est moins large que dans le cas de la figure 11, mais il présente une intensité plus élevée dans sa globalité. Sur la figure 11, on a représenté, par la référence 15, le faisceau maximum et, par la référence 5, le point chaud maximum qui peuvent être obtenus avec ce mode de réalisation.

La figure 13 représente un exemple d'éclairage avec ce troisième mode de réalisation, dans le cas d'un véhicule roulant à grande vitesse. Dans ce cas, l'écart angulaire est encore diminué, ce qui a pour effet d'augmenter l'intensité lumineuse du point chaud résultant 4 et donc d'augmenter sa portée lumineuse, mais de réduire sa largeur.

Ce mode de réalisation a été décrit dans le cas de projecteurs bifonction ayant chacun un module fixe et un module pivotant. Dans ce cas, ce mode de réalisation peut être combiné avec le premier mode de réalisation qui consiste à moduler l'intensité du point chaud fixe en fonction de la vitesse.

Ce mode de réalisation peut aussi être mis en oeuvre dans le cas de projecteurs sans module fixe. Le chevauchement recherché est alors réalisé entre le point chaud droit et le point chaud gauche.

Quel que soit le mode de réalisation choisit, la modulation d'intensité lumineuse, d'angle de rotation ou d'écart angulaire est réalisée en fonction de la vitesse du véhicule, cette vitesse étant liée aux conditions de circulation. La vitesse du véhicule peut être déterminée de plusieurs façons, par exemple, en récupérant une ou plusieurs informations provenant :
- du compteur de vitesse,
- du capteur de lacet,
- de l'angle au volant,
- de l'accélération latérale, et/ou
- du GPS (global positionning system, en termes anglo-saxons).

A la lecture de ce qui précède, on comprend que, selon l'invention, les projecteurs bifonction sont commandés selon une première loi classique lorsqu'ils sont en mode de croisement et qu'ils sont commandés selon une deuxième loi, lorsqu'ils sont en mode route, cette deuxième loi correspondant à un mode de réalisation, ou à une combinaison de modes de réalisation décrits précédemment.

## Revendications

1. Procédé d'éclairage d'une route par au moins un projecteur droit et un projecteur gauche montés sur un véhicule, le projecteur droit et le projecteur gauche comportant chacun au moins un module d'éclairage à longue distance pivotant par rapport à un axe (X) du véhicule et au moins un module d'éclairage à longue distance fixe émettant un spot lumineux fixe (1) sur la route délimité par les isolux à environ 40 à 60 % du maximum du faisceau lumineux émis par ce module d'éclairage fixe,
- le module d'éclairage pivotant du projecteur droit émettant un faisceau lumineux droit (12) comportant, en son centre, un spot lumineux droit (2), délimité par les isolux à environ 40 à 60 % du maximum du faisceau lumineux droit, et
- le module d'éclairage pivotant du projecteur gauche émettant un faisceau lumineux gauche (13) comportant, en son centre, un spot lumineux gauche (3), délimité par les isolux à environ 40 à 60 % du maximum du faisceau lumineux gauche,
**caractérisé en ce que** les modules d'éclairage pivotants des projecteurs droit et gauche sont réglés de façon à ce que lesdits spots lumineux droit et gauche (2, 3) émis par les projecteurs se superposent au moins partiellement lors du pivotement des modules d'éclairage dans les virages, ledit spot lumineux fixe est situé dans l'axe (X) du véhicule et le module d'éclairage fixe a une intensité d'éclairage variable qui est fonction de sa trajectoire et/ou de la vitesse du véhicule, de manière à ne former qu'une une seule et même tâche lumineuse à l'intérieur du faisceau lumineux résultant.

2. Procédé d'éclairage selon l'une quelconque des revendications précédentes, **caractérisé en ce que** chaque module d'éclairage pivotant a un angle de rotation, par rapport à l'axe (X) du véhicule, variable en fonction de la vitesse du véhicule.

3. Procédé selon l'une quelconque des revendications précédentes, **caractérisé en ce qu'**un écart angulaire, formé par la différence des directions d'émission des modules pivotants des projecteurs droit et gauche, est variable en fonction de la vitesse du véhicule.

4. Procédé selon l'une quelconque des revendications précédentes, **caractérisé en ce que** l'intensité d'éclairage du module fixe augmente proportionnellement à la vitesse du véhicule.

5. Procédé selon l'une quelconque des revendications 2 à 4, **caractérisé en ce que** les angles de rotation des modules pivotants diminuent inversement proportionnellement à la vitesse du véhicule.

6. Procédé selon l'une quelconque des revendications 3 à 5, **caractérisé en ce que** l'écart angulaire des modules pivotants diminue inversement proportionnellement à la vitesse du véhicule.

7. Procédé selon l'une quelconque des revendications 3 à 5, **caractérisé en ce que** l'intensité du spot lumineux fixe diminue inversement proportionnellement avec l'angle de rotation des spots lumineux pivotants droite et gauche.

8. Procédé selon l'une quelconque des revendications précédentes, dans lequel chaque projecteur comporte un module d'éclairage bifonction fournissant, dans une position de route, un éclairage à longue distance et, dans une position de croisement, un éclairage à courte distance,
**caractérisé en ce que** l'intensité du module fixe, les angles de rotation et l'écart angulaire des modules pivotants ont des variations différentes lorsque le module d'éclairage est en position de route et lorsqu'il est en position de croisement.

9. Procédé selon l'une quelconque des revendications précédentes, **caractérisé en ce que** la vitesse du véhicule est déterminée à partir d'une information de compteur de vitesse et/ou d'une information d'angle au volant et/ou d'une information d'accélération latérale et/ou d'une information de capteur de lacet et/ou d'informations issues du GPS du véhicule.

10. Dispositif d'éclairage pour véhicule automobile, **caractérisé en ce qu'**il met en oeuvre un procédé selon l'une quelconque des revendications précédentes.

11. Véhicule automobile équipé du dispositif selon la revendication 10.

## Claims

1. Method for lighting a road by means of at least one right headlight and one left headlight which are fitted on a vehicle, the right headlight and the left headlight each comprising a long-distance lighting module which pivots relative to an axis (X) of the vehicle, and at least one fixed long-distance lighting module which emits a fixed light spot (1) onto the road, which spot is delimited by the isoluxes at approximately 40 to 60% of the maximum of the light beam emitted by this fixed lighting module,
- with the pivoting lighting module of the right headlight emitting a right light beam (12) comprising in its centre a right light spot (2) which is delimited by the isoluxes at approximately 40 to 60% of the maximum of the right light beam, and
- with the pivoting lighting module of the left headlight emitting a left light beam (13) comprising in its centre a left light spot (3) which is delimited by the isoluxes at approximately 40 to 60% of the maximum of the left light beam,
**characterised in that** the pivoting lighting modules of the right and left headlights are regulated such that the said right and left spots (2, 3) emitted by the headlights are superimposed at least partially during the pivoting of the lighting modules on bends, and the said fixed light spot is situated on the axis (X) of the vehicle, and the fixed lighting module has a variable lighting intensity which depends on its trajectory and/or on the speed of the vehicle, such as to form only a single light spot in the interior of the resulting light beam.

2. Lighting method according to any one of the preceding claim, **characterised in that** each pivoting lighting module has an angle of rotation relative to the axis (X) of the vehicle which is variable according to the speed of the vehicle.

3. Method according to either of the preceding claims, **characterised in that** an angular gap, formed by the difference in the directions of emission of the pivoting modules of the right and left headlights, is variable according to the speed of the vehicle.

4. Method according to any one of the preceding claims, **characterised in that** the lighting intensity of the fixed module increases in proportion with the speed of the vehicle.

5. Method according to any one of claims 2 to 4, **characterised in that** the angles of rotation of the pivoting modules decrease in inverse proportion to the speed of the vehicle.

6. Method according to any one of claims 3 to 5, **characterised in that** the angular gap of the pivoting modules decreases in inverse proportion to the speed of the vehicle.

7. Method according to any one of claims 3 to 5, **characterised in that** the intensity of the fixed light spot decreases in inverse proportion to the angle of rotation of the right and left pivoting light spots.

8. Method according to any one of the preceding claims, wherein each headlight comprises a dual function lighting module which, in a high-beam position, provides long-distance lighting, and, in a low-beam position, provides short-distance lighting, **characterised in that** the intensity of the fixed module, the angles of rotation and the angular gap of the pivoting modules, have different variations when the lighting module is in the high-beam position and when it is in the low-beam position.

9. Method according to any one of the preceding claims, **characterised in that** the speed of the vehicle is determined on the basis of speedometer information, and/or information relating to the angle on the steering wheel, and/or lateral acceleration information, and/or road-winding sensor information, and/or information obtained from the GPS of the vehicle.

10. Lighting device for a motor vehicle, **characterised in that** it implements a method according to any one of the preceding claims.

11. Motor vehicle equipped with the device according to claim 10.

## Patentansprüche

1. Verfahren zum Beleuchten einer Straße durch wenigstens einen rechten und einen linken an einem Fahrzeug angebrachten Scheinwerfer, wobei der rechte Scheinwerfer und der linke Scheinwerfer jeweils wenigstens eine bezüglich einer Fahrzeugachse (X) schwenkbare Weitstrahlereinheit und wenigstens eine feststehende Weitstrahlereinheit umfassen, die einen ortsfesten Lichtpunkt (1) auf die Straße emittiert, der von Isoluxlinien mit etwa 40 bis 60 % des Höchstwertes des durch diese feststehende Lichteinheit emittierten Lichtbündels umgrenzt ist,
- wobei die schwenkbare Lichteinheit des rechten Scheinwerfers ein rechtes Lichtbündel (12) emittiert, das in seiner Mitte einen rechten Lichtpunkt (2) aufweist, der von Isoluxlinien mit etwa 40 bis 60 % des Höchstwertes des rechten Lichtbündels umgrenzt ist, und
- wobei die schwenkbare Lichteinheit des linken Scheinwerfers ein linkes Lichtbündel (13) emittiert, das in seiner Mitte einen linken Lichtpunkt (3) aufweist, der von Isoluxlinien mit etwa 40 bis 60 % des Höchstwertes des linken Lichtbündels umgrenzt ist,
**dadurch gekennzeichnet, dass** die schwenkbaren Lichteinheiten des rechten und des linken Scheinwerfers solchermaßen geregelt sind, dass sich der rechte und der linke von den Scheinwerfern emittierte Lichtpunkt (2, 3) beim Schwenken der Lichteinheiten in Kurven wenigstens teilweise überlagern, der ortsfeste Lichtpunkt in der Fahrzeugachse (X) liegt und die feststehende Lichteinheit eine veränderliche Lichtstärke hat, die vom Fahrweg und/oder von der Geschwindigkeit des Fahrzeugs abhängt, um nur einen einzigen und gleichen Lichtfleck innerhalb des sich ergebenden Lichtbündels zu bilden.

2. Beleuchtungsverfahren nach dem vorhergehenden Anspruch,
**dadurch gekennzeichnet, dass** jede schwenkbare Lichteinheit einen Schwenkwinkel in Bezug auf die Fahrzeugachse (X) hat, der abhängig von der Fahrzeuggeschwindigkeit veränderlich ist.

3. Verfahren nach einem der vorhergehenden Ansprüche,
**dadurch gekennzeichnet, dass** ein durch die unterschiedlichen Emissionsrichtungen der schwenkbaren Einheiten des rechten und des linken Scheinwerfers gebildeter Winkelabstand abhängig von der Fahrzeuggeschwindigkeit veränderlich ist.

4. Verfahren nach einem der vorhergehenden Ansprüche,
**dadurch gekennzeichnet, dass** die Lichtstärke der feststehenden Einheit proportional zur Fahrzeuggeschwindigkeit zunimmt.

5. Verfahren nach einem der Ansprüche 2 bis 4,
**dadurch gekennzeichnet, dass** die Schwenkwinkel der schwenkbaren Einheiten umgekehrt proportional zur Fahrzeuggeschwindigkeit abnehmen.

6. Verfahren nach einem der Ansprüche 3 bis 5,
**dadurch gekennzeichnet, dass** der Winkelabstand der schwenkbaren Einheiten umgekehrt proportional zur Fahrzeuggeschwindigkeit abnimmt.

7. Verfahren nach einem der Ansprüche 3 bis 5,
**dadurch gekennzeichnet, dass** die Stärke des ortsfesten Lichtpunkts umgekehrt proportional mit dem Schwenkwinkel des rechten und des linken schwenkbaren Lichtpunkts abnimmt.

8. Verfahren nach einem der vorhergehenden Ansprüche, wobei jeder Scheinwerfer eine Bifunktionslichteinheit umfasst, die in einer Fernlichtstellung ein Fernlicht und in einer Abblendlichtstellung ein Nahlicht liefert,
**dadurch gekennzeichnet, dass** die Lichtstärke der feststehenden Einheit, die Schwenkwinkel und der Winkelabstand der schwenkbaren Einheiten unterschiedlichen Veränderungen unterliegen, wenn sich die Lichteinheit in Fernlichtstellung befindet und wenn sich diese in Abblendlichtstellung befindet.

9. Verfahren nach einem der vorhergehenden Ansprüche,
**dadurch gekennzeichnet, dass** die Fahrzeuggeschwindigkeit anhand einer Information des Tachometers und/oder einer Information des Lenkwinkels und/oder einer Information der Querbeschleunigung und/oder einer Information des Gierratensensors und/oder vom GPS des Fahrzeugs ausgegebenen Informationen bestimmt wird.

10. Kraftfahrzeugbeleuchtungsvorrichtung,
**dadurch gekennzeichnet, dass** diese ein Verfahren nach einem der vorhergehenden Ansprüche ausführt.

11. Kraftfahrzeug, ausgestattet mit der Vorrichtung nach Anspruch 10.
